(19)

**Europäisches Patentamt**

**European Patent Office**

**Office européen des brevets**

(11) **EP 2 573 990 A1**

(12) **EUROPEAN PATENT APPLICATION**

(43) Date of publication:
  **27.03.2013 Bulletin 2013/13**

(51) Int Cl.:
  **H04L 27/26** (2006.01)

(21) Application number: **11306219.4**

(22) Date of filing: **26.09.2011**

(84) Designated Contracting States:
  **AL AT BE BG CH CY CZ DE DK EE ES FI FR GB
  GR HR HU IE IS IT LI LT LU LV MC MK MT NL NO
  PL PT RO RS SE SI SK SM TR**
  Designated Extension States:
  **BA ME**

(71) Applicant: **Alcatel Lucent
  75007 Paris (FR)**

(72) Inventors:
  • **Schaich, Frank
    70469 Stuttgart (DE)**

  • **Wild, Thorsten
    70435 Stuttgart (DE)**

(74) Representative: **2SPL Patentanwälte
    Postfach 15 17 23
    80050 München (DE)**

Remarks:
  Amended claims in accordance with Rule 137(2)
  EPC.

(54) **Apparatus and method for transmitting a multicarrier signal**

(57)    Embodiments relate to methods and apparatuses for transmitting a multicarrier signal (11) associated to at least one user of a communication system. The multicarrier signal (11) is generated by assigning a plurality of overlapping radio resources (13) one or more users, wherein the plurality of radio resources (13) overlap in time and/or frequency, such that the plurality of overlapping radio resources assigned to the one or more users suffer from self-interference.

Fig. 1

EP 2 573 990 A1

**Description**

Embodiments of the present invention generally relate to communication systems and, more specifically, to methods and apparatuses for transmitting a non-orthogonal multi-carrier signal, i.e., a non-orthogonal signal comprising a plurality of subcarriers.

Background

Wireless communication networks are steadily growing with an increasing number of systems for mobile communication being deployed. Today, wireless mobile communication networks based on various underlying Radio Access Technologies (RATs) are available. Second generation (2G) mobile communication systems, such as e.g. GSM/EDGE (Global System for Mobile Communications/Enhanced Data Rates for GSM Evolution), are based on a combined TDMA/FDMA (Time Division Multiple Access/Frequency Division Multiple Access) scheme. Third Generation (3G) mobile communication systems, such as UMTS (Universal Mobile Telecommunications System) or CDMA2000 (IS-2000), are based on code division multiple access (CDMA) technology. Newer mobile communication technologies, such as e.g. WiMAX (Worldwide Interoperability for Microwave Access) or 3GPP (3rd Generation Partnership Project) Long Term Evolution (LTE), which may also be referred to as 4th Generation (4G) mobile communication systems, are based on Orthogonal Frequency Division Multiplexing (OFDM) technologies. LTE, e. g., uses OFDMA in the downlink and single carrier frequency division multiple access (SC-FDMA) in the uplink.

OFDM is a frequency-division multiplexing (FDM) technique used as a digital multi-carrier modulation method. A large number of closely-spaced orthogonal subcarriers are used to carry data. Multiple-access schemes are said to be orthogonal when an ideal receiver may completely reject arbitrarily strong unwanted signals using different basis functions than the desired signal. Conventionally, all multiple-access schemes have been designed based on orthogonal user-specific basis functions. In TDMA, for example, the orthogonal basis functions are non-overlapping pulses corresponding to time slots. In OFDM, a set of frequency multiplexed signals with the exact minimum frequency spacing needed to make them orthogonal is used so that they do not interfere with each other. The time-bandwidth product of a signal pulse (excluding cyclic prefix) is 1 in OFDM. The data is divided into several parallel data streams or channels, one for each subcarrier. Each subcarrier may be modulated with a conventional modulation scheme (e.g. QAM = Quadrature Amplitude Modulation or PSK = Phase-Shift Keying) at a relatively low symbol rate, maintaining total data rates similar to former generation single-carrier modulation schemes in the same bandwidth.

To account for Inter-Symbol Interference (ISI), which may be caused by a frequency-selective communications channel, OFDM systems rely on the transmission of a so-called cyclic prefixed signal over such a communications channel. Thereby a cyclic redundancy of a length v corresponding to a number of Cyclic Prefix (CP) symbols is added to the signal to be transmitted as a prefix in such a way that $x_k(-i) = x_k(N-i)$ for $i$ = 1, 2, .., v, wherein $\mathbf{x}_k = [x_k(1) \ x_k(2) \ ... \ x_k(N)]^T$ denotes the IFFT of the $k$-th message symbol $\mathbf{d}_k = [d_k(1) \ d_k(2) \ ... \ d_k(N)]^T$ of an N subcarrier OFDM system. As a repetition of the end of the symbol, it allows the linear convolution of a frequency-selective multipath channel to be modeled as circular convolution, which in turn may be transformed to the frequency domain using a discrete Fourier transform. This approach allows for simple frequency-domain processing, such as channel estimation and equalization. In order for the cyclic prefix to be effective (i.e. to serve its aforementioned objectives), the length of the cyclic prefix must be at least equal to the length of the multipath channel.

One disadvantage of Cyclic-Prefix Orthogonal Frequency Division Multiplexing (CP-OFDM) is a loss in spectral efficiency due to cyclic prefix insertion and the required guard bands into order to fulfil spectral mask requirements.

For future beyond 4G or 5th Generation (5G) mobile communication systems, it will be necessary that an employed modulation scheme very well supports Coordinated Multi-Point (CoMP) transmission, thus network multiple input multiple output (MIMO), which will be integrated into the system from scratch. CoMP is a technology which sends and receives signals from multiple sectors or cells (sites) to a given mobile terminal (UE). By coordinating transmission among multiple cells, interference from other cells can be reduced and the received power of the desired signal can be increased. For CoMP, CP-OFDM shows limited performance by the fact that either the CP overhead has to be increased (in order to support the delay differences of incoming signals of different sites) or a certain Inter-Symbol Interference (ISI) has to be tolerated. Both options result in a loss of spectral efficiency.

Furthermore, advanced techniques, like CoMP, may create a loss of orthogonality for OFDM based systems. With this loss of orthogonality advanced receiver techniques are required, resulting in a complexity increase.

Summary

Embodiments may be based on the finding that, in upcoming communication systems, advanced and more powerful receiver structures may also support non-orthogonal transmit signal formats. With such non-orthogonal transmit signals, a denser time-frequency packing may be created, which cannot be achieved by existing OFDM systems.

Embodiments of the present invention provide a transmitter apparatus for transmitting a multicarrier signal associated to at least one user of a communication system, wherein the transmitter apparatus comprises a signal generator for generating the multicarrier signal, wherein the signal generator is adapted to assign and/or generate a plurality of overlapping (downlink or uplink) radio resources to the at least one user, wherein the plurality of radio resources overlap in time and/or frequency, such that the plurality of overlapping radio resources assigned to the user suffer from self-interference. In other words, embodiments provide a transmitter for generating a non-orthogonal multicarrier signal which is based on user-specific and potentially also time-/frequency-specific non-orthogonal basis functions in time and/or frequency. That means that a first time or frequency component of the generated multicarrier signal interferes with a second time or frequency component of the multicarrier signal. The overlapping radio resources may hence be overlapping time pulses and/or overlapping frequency bands corresponding to non-orthogonal subcarriers used to transmit signal waveforms from the transmitter apparatus to the at least one user.

The overlapping radio resources may be signal pulses corresponding to data symbols, wherein a signal pulse extends in both time and frequency direction. The extension in time direction corresponds to a symbol interval or spacing, the extension in frequency direction corresponds to a bandwidth of a subcarrier of the multicarrier signal. The symbol spacing $\Delta T_S$ in time direction may be chosen such that two adjacent symbol intervals overlap in time. This may be the case when $\Delta T_S < T_S$, wherein $T_S$ denotes the symbol duration. Alternatively or additionally, the spacing $\Delta f_S$ of two adjacent subcarriers may be chosen such that the passbands of the adjacent subcarriers overlap. This may be the case when $\Delta f_S < B_S$, wherein $B_S$ denotes the bandwidth of a subcarrier of the multicarrier signal. The time-bandwidth product of the radio resources is, hence, allowed to be lower than 1, according to embodiments.

The communication system in which the transmitter apparatus may be employed may be a future beyond-4G (e.g. 5G) wireless communication system, possibly incorporating Coordinated Multi-Point (CoMP) techniques. According to some embodiments, one could look at such a communication system as a Non-Orthogonal Frequency Division Multiplexing based system. The transmitter apparatus may, for example, be implemented in a base transceiver station or in a mobile terminal. The resulting non-orthogonal multi-carrier signal may then be regarded as a downlink or an uplink signal, respectively. In embodiments where the transmitter apparatus is implemented in a base transceiver station, the transmitter apparatus may be implemented in a central unit and/or a remote unit (e.g. a Remote Radio Head, RRH) thereof.

The signal generator may comprise digital baseband processing circuitry for generating and processing the overlapping and, hence, self-interfering signal waveforms of the non-orthogonal multicarrier signal. The signal processing may comprise digital baseband signal processing in the frequency domain and/or digital baseband signal processing in the time domain. Thereby, frequency domain signals may be transformed into time domain signals by inverse Fourier transformation algorithms. Correspondingly, time domain signals may be transformed into frequency domain signals by Fourier transformation algorithms. For example, Fast Fourier Transform (FFT) and Inverse Fast Fourier Transform (IFFT) algorithms may be used in the signal generator and/or receiving counterparts in a receiver for the non-orthogonal multicarrier signal.

In order to be able to handle or limit receiver complexity, embodiments of the signal generator may be adapted to assign a plurality of non-overlapping radio resource blocks to the one or more users, wherein a radio resource block comprises a plurality of overlapping radio resources, wherein adjacent non-overlapping radio resource blocks do not overlap in time and/or frequency, and wherein adjacent overlapping radio resources of a resource block do overlap in time and/or frequency. That is to say, while individual radio resources (e.g. signal pulses corresponding to data symbols) within a given radio resource block may overlap each other in time and/or frequency direction/domain, adjacent radio resource blocks comprising overlapping radio resources or transmit signal waveforms, respectively, are well separated from each other in time and/or frequency direction/domain. Such a so-called Block-Overlapping MultiCarrier (BO-MC) signal may force receiver algorithms, which are corresponding to the transmitted non-orthogonal multicarrier signal, into well-defined states at the beginning and/or the end of a received radio resource block. Such receiver algorithms may, for example, be based on trellis decoding techniques, such as Maximum Likelihood Sequence Estimation (MLSE) or symbol-by-symbol Maximum A Posteriori probability (MAP) detection. Another possible advanced receiver technique which is suited to this particular signal structure is the usage of compressive sensing. Compressive sensing uses the fact that the BO-MC receive signal for the user of interest is sparse when it is represented by a superposition of particular basis functions, in this case: The time-frequency shifted pulses. The sparsity comes from the fact that the BO-MC signal is only block-wise overlapping in time and frequency. Furthermore, this sparsity may be exploited to reduce the complexity of successive interference cancellation (SIC) receivers.

Embodiments of the signal generator may be adapted to use an inter-block time spacing $\Delta T_{inter}$ and an inter-block frequency spacing $\Delta f_{inter}$ to separate adjacent non-overlapping radio resource blocks from each other. Thereby, the inter-block parameters $\Delta T_{inter}$ and $\Delta f_{inter}$ may both refer to the distance between the time/frequency centers of adjacent non-overlapping radio resource blocks. The inter-block parameters $\Delta T_{inter}$ and $\Delta f_{inter}$ may be adapted to a coherence time and/or a coherence bandwidth of a communications channel the multicarrier signal is traveling through. Coherence time is the time duration over which the communications channel's impulse response is considered to be substantially not varying. This is to say, the coherence time is a statistical measure of the time duration over which the channel impulse response is essentially invariant. In other words, coherence time is the time duration over which the propagation channels of any two received signals (at different times) have a strong correlation. In the frequency domain, the coherence bandwidth is a statistical measure of the range of frequencies over which the channel can be considered "flat", i.e., having approximately equal gain and linear phase. In other words, coherence bandwidth is the range of frequencies over which any two frequency components (e.g. two sinusoidal time signals with different periodicity) have a strong correlation. For example, the inter-block parameters $\Delta T_{inter}$ and $\Delta f_{inter}$ may be chosen such that a bandwidth corresponding to a non-overlapping radio resource block comprising a plurality of overlapping radio resources (e.g. signal pulses with overlapping time and/or frequency components) is smaller than the coherence bandwidth of the communication channel and/or that multipath gains of the communication channel do essentially not change during the duration of a radio resource block. The frequency or subcarrier spacing $\Delta f_{inter}$ between adjacent radio resource blocks as well as the intra-block spacing of adjacent radio resources with a block may be chosen to be larger than the maximum Doppler spread of the communication channel.

Looking inside a contiguous radio resource block, the signal generator may be adapted to assign or generate the plurality of overlapping radio resources of said resource block such that a time spacing of adjacent signal pulses within the radio resource block is $\Delta T_{intra}$, and/or such a frequency spacing of adjacent signal pulses within the radio resource block is $\Delta f_{intra}$, wherein $\Delta T_{intra}$ may preferably be smaller than the Nyquist sample duration $\Delta T_{Nyquist}$ and/or $\Delta T_{intra}{}^* \Delta f_{intra} < 1$. Thereby, the intra-block parameters $\Delta T_{intra}$ and $\Delta f_{intra}$ may both refer to the distance of the time/frequency centers of the adjacent radio resources (signal pulses). The Nyquist sample duration $\Delta T_{Nyquist}$ is the reciprocal to the Nyquist rate, which is commonly denoted as the minimum sampling rate required to avoid aliasing, equal to twice the highest frequency contained within the signal to be processed.

In some embodiments the signal generator may be adapted to pulse-shape individual signal pulses $g_{mn}(t)$ corresponding to the plurality of overlapping radio resources of a radio resource block individually. Thereby, $g_{mn}(t)$ denotes the n-th signal pulse in time direction and the m-th signal pulse in frequency direction of a radio resource block, wherein $n = 1, 2, ..., N$ and $m = 1, 2, ..., M$. This individual pulse shaping may help, for example, to suppress cross-talk between neighbouring non-overlapping radio resource blocks (e.g. by block-individual band-pass parameters). This pulse shaping can e.g. be done by filtering (e.g. two-stage filtering, first per subcarrier, second per block). The per-subcarrier filtering stage could be realized via a poly-phase network, as it is done with filterbank based multi-carrier (FBMC). The per-block filtering could be performed by a digital filter adapted to the frequency width and position of the block.

In some embodiments the signal generator may be adapted to assign the plurality of overlapping radio resources such that the intra-block time spacing $\Delta T_{intra}$ of adjacent overlapping signal pulses within a non-overlapping radio resource block corresponds to the Nyquist sample duration $\Delta T_{Nyquist}$, and such that the intra-block frequency or subcarrier spacing $\Delta f_{intra}$ of adjacent signal pulses within a radio resource block is $\Delta f_{intra} = 1/(2^* \Delta T_{Nyquist})$. At the same time, the inter-block time spacing $\Delta T_{inter}$ of adjacent non-overlapping radio resource blocks may correspond to an integer multiple of $\Delta T_{Nyquist}$, and the inter-block frequency spacing $\Delta f_{inter}$ of adjacent non-overlapping radio resource blocks may correspond to an integer multiple of $\Delta f_{intra}$. Such a non-orthogonal multicarrier signal may, for example, be synthesized by superimposing two conventional OFDM signals (each with subcarrier spacing corresponding to $1/\Delta T_{Nyquist}$) with a relative frequency offset of $1/(2^* \Delta T_{Nyquist})$ between the two. For this OFDM special case, in order to have less complex receivers, it still might be beneficial to keep the cyclic prefix for certain setups. Note that half the subcarrier-spacing (with overlapping subcarriers) may lead to nearly the double amount of transported data symbols compared to a conventional OFDM system.

In general, the signal generator may be adapted to generate the multicarrier signal by superimposing a plurality of $k$ OFDM signals, each having a frequency spacing $\Delta f_S$ of orthogonal subcarriers according to $\Delta f_S = 1/\Delta T_S$, wherein $\Delta T_S$ denotes the OFDM symbol spacing in time direction. $\Delta T_S$ may be equal to or larger than the Nyquist sample duration $\Delta T_{Nyquist}$ of an OFDM signal transmitted over a bandwidth-limited communications channel. The frequency spacing $\Delta f_{intra}$ of adjacent non-orthogonal subcarriers of the composite non-orthogonal multicarrier signal is $\Delta f_{intra} = 1/(k^* \Delta T_S)$, wherein k is an integer equal to or larger than 2. In case of BO-MC the inter-block time spacing $\Delta T_{inter}$ of adjacent non-overlapping radio resource blocks may correspond to an integer multiple of $\Delta T_S$, and the inter-block frequency spacing $\Delta f_{inter}$ of adjacent non-overlapping radio resource blocks may correspond to an integer multiple of $\Delta f_{intra}$.

An option could also be to switch off one of the $k$ (e.g. $k = 2$) generating OFDM building blocks, resulting in standard/conventional OFDM (for $k = 2$). This could e.g. be done depending on a channel quality or a Signal-to-Noise Ratio (SNR). For example, in high SNR operation regimes, two or more OFDM building blocks may be turned on, while in low SNR operation regimes only one conventional OFDM building block may be active. According to embodiments, the signal generator may therefore be adapted to switch at least one of the plurality of k OFDM signals on and/or off dependent on a quality of the communications channel.

According to some embodiments the signal generator may be adapted to additionally vary the intra-block parameters $\Delta T_{intra}$, $\Delta f_{intra}$, and/or $g_{mn}(t)$ over frequency and/or time, while using constant values for the inter-block parameters $\Delta T_{inter}$ and $\Delta f_{inter}$. By varying $\Delta T_{intra}$, $\Delta f_{intra}$, and/or $g_{mn}(t)$ over frequency and time, a BO-MC signal generator can flexibly adapt to various channel conditions and usage types. For example, for low-mobility CoMP users it might be attractive to use a small $\Delta f_{intra}$ in conjunction with a large $\Delta T_{intra}$, as in CoMP the overall delay spread due to larger distances between mobile and serving/supporting cells is typically larger than the distance for non-CoMP between mobile and serving cell. In this case, these signal parameters allow for less complex receivers. One simple realization of this flexibility would be to switch the intra-block parameters between various sets of intra-block parameters over time.

Further embodiments of the present invention may also comprise a receiver apparatus adapted to mitigate the self-interference of the non-orthogonal multicarrier signal generated with a transmitter apparatus according to embodiments.

Yet a further embodiment provides a method for transmitting a multicarrier signal associated to at least one user of a communication system, the method comprising a step of generating the multicarrier signal by assigning a plurality of overlapping radio resources to the at least one user, wherein the plurality of radio resources overlap in time and/or frequency, such that the plurality of overlapping radio resources assigned to the at least one user suffer from self-interference.

Some embodiments comprise a digital control circuit installed within the transmitter or receiver apparatus for the non-orthogonal multicarrier signal. Such a digital control circuit, e.g. a digital signal processor (DSP), needs to be programmed accordingly. Hence, yet further embodiments also provide a computer program having a program code for performing embodiments of the method, when the computer program is executed on a computer or a digital processor.

One benefit of embodiments of the present invention is the provision of a novel non-orthogonal physical layer modulation scheme, superior to presently used OFDM in terms of spectral efficiency and tailored to the needs of potential 5G mobile communications. Embodiments of the present invention have the potential to achieve higher spectral efficiencies compared to CP-OFDM and to provide more flexibility and adaptability as the signal structure of the non-orthogonal multicarrier signal may be flexibly adapted on a per-user basis. Also, the intra- and/or inter-block parameters of the non-orthogonal multicarrier may be especially tailored in order to benefit from certain signal constellations allowing simplified receiver signal processing algorithms.

Brief description of the Figures

Some embodiments of apparatuses and/or methods will be described in the following by way of example only, and with reference to the accompanying figures, in which

Fig. 1    shows a block diagram of a transmitter apparatus according to an embodiment;

Fig. 2a    shows a schematic time-frequency depiction of a first embodiment of a generated non-orthogonal multicarrier signal;

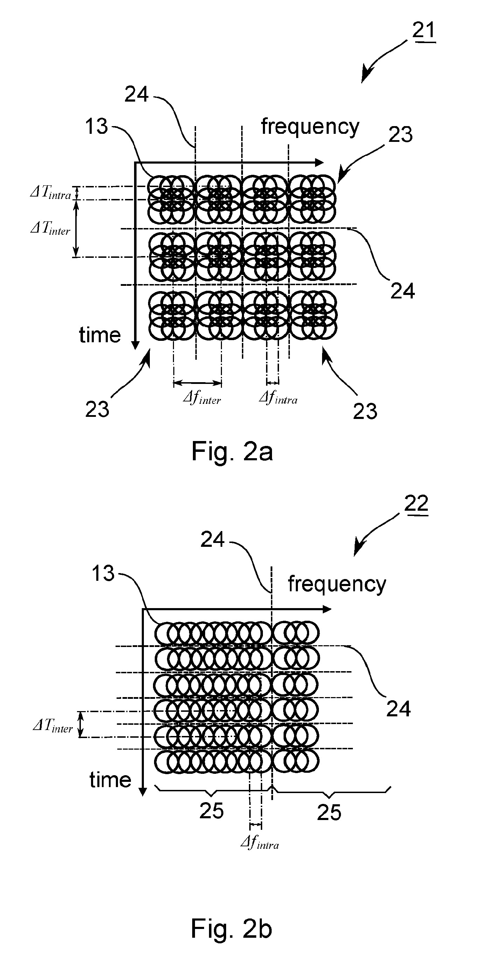

Fig. 2a    shows a schematic time-frequency depiction of a second embodiment of a generated non-orthogonal multi-carrier signal;

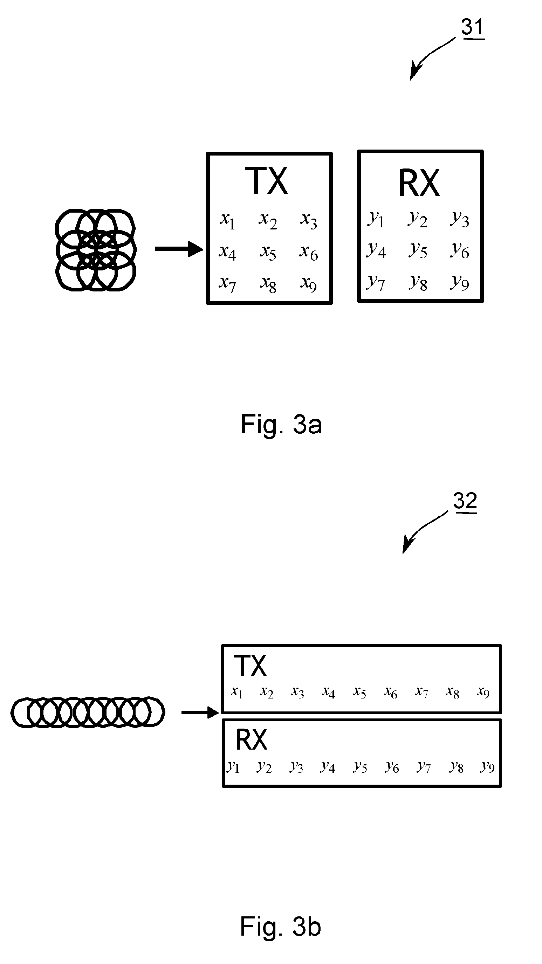

Fig. 3a    illustrates a notation for one 3 x 3 BO-MC radio resource block of 3 x 3 = 9 overlapping base functions;

Fig. 3b    illustrates a notation for one 1 x 9 BO-MC radio resource block of 1 x 9 = 9 overlapping base functions; and

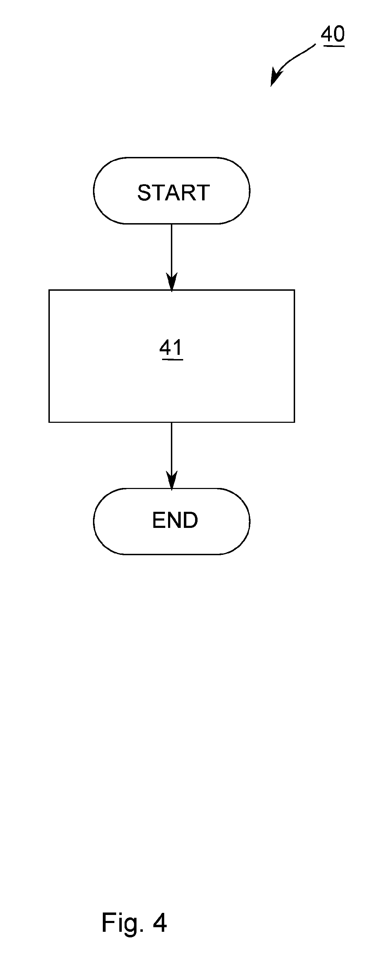

Fig. 4    shows a schematic flow chart of a method according to an embodiment.

Description of Embodiments

Various example embodiments will now be described more fully with reference to the accompanying drawings in which some example embodiments are illustrated.

Accordingly, while example embodiments are capable of various modifications and alternative forms, embodiments thereof are shown by way of example in the drawings and will herein be described in detail. It should be understood, however, that there is no intent to limit example embodiments to the particular forms disclosed, but on the contrary, example embodiments are to cover all modifications, equivalents, and alternatives falling within the scope of the invention. Like numbers refer to like elements throughout the description of the figures.

It will be understood that when an element is referred to as being "connected" or "coupled" to another element, it can be directly connected or coupled to the other element or intervening elements may be present. In contrast, when an element is referred to as being "directly connected" or "directly coupled" to another element, there are no intervening elements present. Other words used to describe the relationship between elements should be interpreted in a like fashion (e.g., "between" versus "directly between," "adjacent" versus "directly adjacent," etc.).

The terminology used herein is for the purpose of describing particular embodiments only and is not intended to be limiting of example embodiments. As used herein, the singular forms "a," "an" and "the" are intended to include the plural forms as well, unless the context clearly indicates otherwise. It will be further understood that the terms "comprises," "comprising," "includes" and/or "including," when used herein, specify the presence of stated features, integers, steps, operations, elements and/or components, but do not preclude the presence or addition of one or more other features, integers, steps, operations, elements, components and/or groups thereof.

Unless otherwise defined, all terms (including technical and scientific terms) used herein have the same meaning as commonly understood by one of ordinary skill in the art to which example embodiments belong. It will be further understood that terms, e.g., those defined in commonly used dictionaries, should be interpreted as having a meaning that is consistent with their meaning in the context of the relevant art and will not be interpreted in an idealized or overly formal sense unless expressly so defined herein.

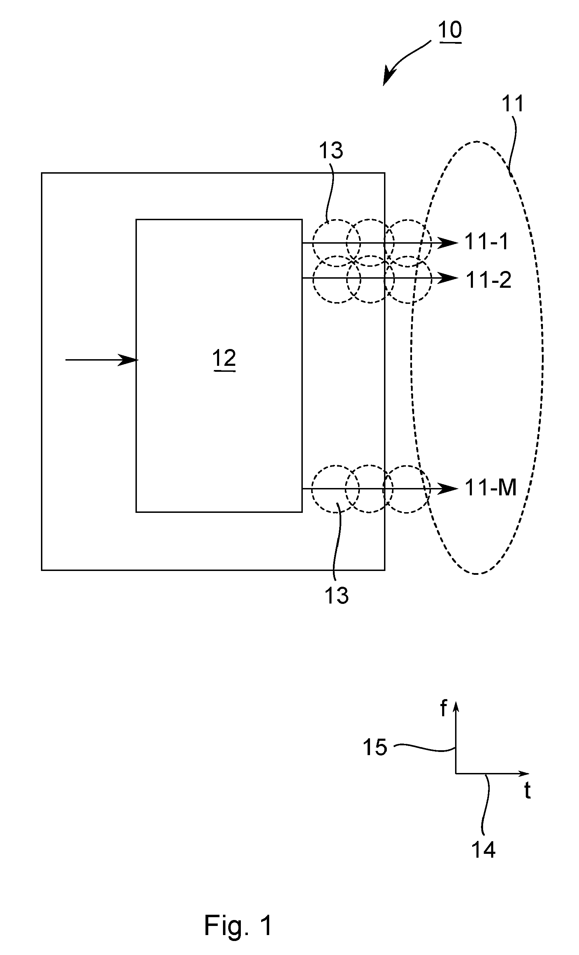

Fig. 1 schematically shows a block diagram of a transmitter apparatus 10 according to an embodiment of the present invention.

The transmitter apparatus 10 serves for transmitting a non-orthogonal multicarrier signal 11 associated to one or a plurality of users of a communication system. The transmitter apparatus 10 comprises, among other digital and analog electronic devices, a signal generator 12 for generating the multicarrier signal 11. The signal generator 12 is adapted to generate and/or assign a plurality of overlapping radio resources 13 to one or a plurality of users. According to embodiments, the plurality of radio resources 13 overlap in time and/or in frequency, such that the plurality of overlapping radio resources 13 suffers from self-interference, as e.g. inter-symbol interference and/or inter-subcarrier interference. That is to say, the multicarrier signal 11 is non-orthogonal in at least time or frequency direction by being based on non-orthogonal basis functions in time and/or frequency direction.

The multicarrier signal 11 comprises a plurality of M subcarriers 11-1, 11-2, ..., 11-M, wherein the subcarriers 11-1, 11-2, ..., 11-$M$ may be assigned to a single user or to a plurality of users. In contrast to conventional communication systems, the multicarrier signal 11 is based on non-orthogonal basis functions in time direction 14 and/or frequency direction 15. Therefore, radio resources or signal pulses 13 assigned to the individual subcarriers 11-1, 11-2, ..., 11-$M$ may overlap in time direction 14, in frequency direction 15, or even in both, as it is exemplarily indicated for the subcarriers 11-1 and 11-2 of the non-orthogonal multicarrier signal 11. That is to say, according to embodiments, controlled self-interference between adjacent signal pulses 13 is introduced in time direction and/or in frequency direction.

The generation of the non-orthogonal multicarrier signal 11 may be performed similar to the generation of a conventional OFDM signal. According to some embodiments the non-orthogonal multicarrier signal 11 may, for example, be the result of a composition of a plurality of conventional OFDM signals, each having a subcarrier spacing leading to orthogonal subcarriers. By appropriate superposition of the plurality of conventional OFDM signals the composite non-orthogonal multicarrier signal 11 may have a reduced subcarrier spacing, resulting in overlapping and, hence, non-orthogonal subcarrier transmission bands of the composite multicarrier signal 11.

In the following the time spacing of adjacent radio resources or time-frequency signal pulses 13 corresponding to an arbitrary subcarrier 11-$m$ ($m$ = 1, 2, ..., M) of the non-orthogonal multicarrier signal 11 will be referred to as $\Delta T_{intra}$, while the frequency spacing of adjacent radio resources or time-frequency signal pulses 13 will be referred to as $\Delta f_{intra}$. According to embodiments, the signal generator 12 may be adapted to generate the multicarrier signal 11 by choosing $\Delta T_{intra} {}^{*}\Delta f_{intra}$ < 1, leading to overlapping radio resources 13 in time and/or frequency. Additionally or alternatively, the signal generator 12 may be adapted to set $\Delta T_{intra}$ smaller than the Nyquist sample duration, leading to overlapping radio resources 13 in time direction.

The loss of orthogonality within the non-orthogonal multicarrier signal 11 may be compensated at the receive side. The denser packing of radio resources may allow a higher spectral efficiency than conventional OFDM. Although receiver complexity will increase compared to conventional OFDM, this is considered to be a manageable task due to Moore's law and further non-orthogonal multicarrier signal design degrees, which will be described in the following.

According to some less complex embodiments with respect to required computational complexity of a corresponding receiver, the signal generator 12 may be adapted to assign a plurality of non-overlapping radio resource blocks to one or more users. Thereby a radio resource block comprises a plurality of overlapping radio resources 13. Adjacent non-overlapping radio resource blocks do not overlap in time or frequency direction. In contrast, adjacent overlapping radio resources 13 within a resource block overlap in time and/or frequency direction. Such a multicarrier signal having non-overlapping radio resource blocks of overlapping radio resources will also be referred to as a block-overlapping multicarrier (BO-MC) signal in the sequel.

Figs. 2a and 2b exemplarily show time-frequency constellations of two BO-MC signals 21, 22, according to embodiments of the present invention.

The BO-MC signal 21 of Fig. 2a comprises a plurality of non-overlapping radio resource blocks 23. Those radio resource blocks 23 do essentially neither overlap in time direction nor in frequency direction, which is highlighted by the dashed separation lines 24. In general, it is also imaginable to have a slight overlap between adjacent radio resource blocks, but less than inside the blocks (e.g., if Gauss-like pulses with long tails are used there might be some remaining small overlap even between adjacent radio resource blocks.) Each of the non-overlapping radio resource blocks 23, however, comprises a plurality of overlapping radio resources 13. In the example of Fig. 2a, the plurality of overlapping radio resources 13 of a non-overlapping radio resource block 23 overlap both in time and frequency direction. That is to say, the intra-block subcarrier separation $\Delta f_{intra}$ in frequency direction is less than the passband bandwidth of a subcarrier of the radio resource block 23. Additionally, adjacent signal pulses 13 also overlap each other in time direction, which will e.g. be the case when the time spacing $\Delta T_{intra}$ of adjacent signal pulses is smaller than the Nyquist sample duration.

The BO-MC signal 22 of Fig. 2b also comprises a plurality of non-overlapping radio resource blocks 25. The radio resource blocks 25 of BO-MC signal 22 do neither overlap in time direction nor in frequency direction, which is highlighted by the dashed lines separation 24. However, each of the non-overlapping radio resource blocks 25 comprises a plurality of overlapping radio resources 13. In the example of Fig. 2b, the plurality of overlapping radio resources 13 only overlap in frequency direction. Here, the inter-block subcarrier separation $\Delta f_{inter}$ in frequency direction is larger than the passband bandwidth of a whole radio resource block 25. Adjacent signal pulses 13 mapped on a subcarrier 11-$m$ ($m$ = 1, 2, ..., $M$) and belonging to a radio resource block 25 overlap each other only in frequency direction.

According to a further non-illustrated embodiment (with interchanged axes compared to Fig. 2b), the plurality of overlapping radio resources 13 may only overlap in time direction. In this case the inter-block subcarrier separation $\Delta f_{inter}$ in frequency direction is larger than the passband bandwidth of a subcarrier corresponding to a radio resource block. Adjacent signal pulses 13 mapped on a subcarrier 11-$m$ ($m$ = 1, 2, ..., $M$) and belonging to a radio resource block 25 overlap each other only in time direction. This will e.g. be the case when the time spacing $\Delta T_{intra}$ of adjacent signal pulses is smaller than the Nyquist sample duration.

According to the principle underlying the BO-MC signals 21, 22 of Figs. 2a and 2b, non-overlapping resource blocks 23, 25 of time-frequency pulses 13 overlapping therein may be used to generate the non-orthogonal multicarrier signals 21, 22. In contrast to conventional OFDM, the subcarriers of the non-orthogonal multicarrier signals 21, 22 may have unequal distances due to the choice of the parameters $\Delta T_{inter}$, $\Delta f_{inter}$, $\Delta T_{intra}$ and $\Delta f_{intra}$. In one of its simplest forms this may be achieved by superimposing several non-overlapping FFT signals to an overlapping composite FFT signal. In order to properly delimit a radio resource block 23, 25 from an adjacent radio resource block 23, the radio resource block 23, 25 may be appropriately filtered to suppress their out-of-block sidelobes. If needed, some time and/or frequency spacing may be inserted between adjacent non-overlapping radio resource blocks 23, 25. Optionally, the block-size of the non-overlapping radio resource blocks 23, 25 may be adapted depending on modulation order, Signal-to-Interference-plus-Noise Ratio (SINR), Doppler and/or delay spread, etc., to keep a manageable trade-off between receiver complexity and performance. Also, pseudo-random phase shifts between adjacent non-overlapping radio resource blocks 23, 25 or even the base functions thereof may be introduced in order to reduce the Peak-to-Average Power Ratio (PAPR) of the resulting non-orthogonal multicarrier signal 11, 21, 22.

With the BO-MC signals 21, 22 of Figs. 2a and 2b a partial loss of orthogonality is created by overlapping modulation waveforms 13 within small time-frequency radio resource blocks 23, 25. The overlapping modulation waveforms 13 pose a challenge to a receiver, which has to cope with self-interference of the resulting non-orthogonal transmit signal 21, 22. The design of embodiments, based on a preferably limited block-size $N*M$ ($N$ = 1, 2, ..., $\infty$; $M$ = 1, 2, ..., $\infty$; $N*M \geq 2$), allows the usage of advanced receivers, like Maximum Likelihood Detection (MLD) or suboptimal variants of it (e.g. Sphere Detection) with tolerable complexity.

A BO-MC signal according to various embodiments comprises many non-overlapping radio resource blocks. Each of them may contain $M*N$ overlapping signals of basic signal pulses $g(t)$, $N$ overlapping signal pulses in time direction, M overlapping signal pulses in frequency direction. If N or M equals 1, then there are no overlapping signal pulses in the respective direction. The radio resource block size (N and $M$) and the radio resource block design may be a function of a tolerable receiver complexity and radio channel parameters (e.g. Doppler spread, Delay spread, etc.). The time spacing of pulses within a radio resource block 23, 25 is $\Delta T_{intra}$, the frequency spacing $\Delta f_{intra}$. Note that $\Delta T_{intra}$ may be different to the Nyquist sample duration $\Delta T_{Nyquist}$, e.g. $\Delta T_{intra} < \Delta T_{Nyquist}$. Furthermore, the multiple subcarriers 11-$m$ ($m$ = 1, 2, ..., M) within a radio resource block 23, 25 can be non-orthogonal with $\Delta T_{intra}*\Delta f_{intra} < 1$. In this case, controlled and known inter-subchannel and/or inter-symbol interference may be generated.

According to some embodiments, the pulses for each symbol 13 of the radio resource block 23, 25 can be shaped individually, thus we may write $g_{mn}(t)$ ($n$ = 1, 2, ..., $N$; $m$ = 1, 2, ..., $M$). The signal generator 12 may hence be adapted to pulse-shape signal pulses corresponding to the plurality of overlapping radio resources 13 individually, e.g. by applying block-individual band-pass parameters. The pulse shaping may e.g. be generated by filtering, e.g. a two-stage filtering, where a signal is first filtered per subcarrier and second filtered per radio resource block 23, 25. The individual pulse shaping may help to suppress undesired cross-talk between neighbouring non-overlapping radio resource blocks 23, 25.

Onto a radio resource block 23, 25 $M*N$ data symbols $a_{mn}(t)$ ($n$ = 1, 2, ..., $N$; $m$ = 1, 2, .., $M$) may be mapped, which can e.g. be QAM symbols in some embodiments, but in general can be any other modulation form. The signal

$s_i^{[b]}(t)$ corresponding to a radio resource block i may then be written as

$$s_i^{[b]}(t) = \sum_{m=0}^{M-1}\left( \exp(j2\pi m\Delta f_{\text{intra}}t)\sum_{n=0}^{N-1} a_{mn,i} g_{mn}\left(t - n\Delta T_{\text{intra}}\right)\right), \qquad (1)$$

wherein M denotes a number of overlapping signal pulses 13 in frequency direction per radio resource block *i*, *N* denotes a number of overlapping signal pulses 13 in time direction per radio resource block *i*, $\Delta T_{intra}$ denotes a time spacing between adjacent signal pulses within the radio resource block *i*, $\Delta f_{intra}$ denotes a frequency spacing between adjacent signal pulses within the radio resource block i, and wherein $g_{mn}(t)$ denotes the n-th signal pulse in time direction and the m-th signal pulse in frequency direction of the radio resource block i.

The composite multicarrier signal $s_{all}(t)$ of M parallel (in frequency direction) and non-overlapping radio resource blocks may be written as

$$s_{all}(t) = \sum_{\widetilde{m}=0}^{\widetilde{M}-1}\left( \exp(j2\pi\widetilde{m}\Delta f_{\text{inter}}t) \sum_{\widetilde{n}=-\infty}^{\infty} s_{\widetilde{n},\widetilde{m}}^{[b]}\left(t - \widetilde{n}\Delta T_{\text{inter}}\right)\right), \qquad (2)$$

wherein M denotes a number of non-overlapping radio resource blocks in frequency direction, $\Delta T_{inter}$ denotes the time spacing between adjacent non-overlapping radio resource blocks, $\Delta f_{inter}$ denotes the frequency spacing between adjacent non-overlapping radio resource blocks, and wherein $s_{\widetilde{n},\widetilde{m}}^{[b]}\left(t - \widetilde{n} T_{\Delta inter}\right)$ denotes the $\widetilde{n}$ -th non-overlapping radio resource block 23, 25 in time direction and the $\widetilde{m}$ -th non-overlapping radio resource block 23, 25 in frequency direction. Note that the inter-block spacings (between radio resource block centers) $\Delta T_{inter}$, $\Delta f_{inter}$ do not necessarily have to be integer multiples of the intra-block spacings (between radio resource centers) $\Delta T_{intra}$, $\Delta f_{intra}$ or the Nyquist sample duration $\Delta T_{Nyquist}$.

From this very general, powerful but complex approach, it is possible to derive a manageable embodiment realization, based on two (conventional) OFDM building blocks with signal tone or subcarrier spacing $\Delta f_{intra} = 1/2\Delta T_{Nyquist}$ and with $\Delta T_{inter}$ and $\Delta f_{inter}$ being integer multiples of the intra-block spacing and the Nyquist sample duration $\Delta T_{Nyquist}$, respectively. Such a non-orthogonal multicarrier signal can be synthesized by superimposing two (conventional) OFDM signals (each with subcarrier-spacing $1/\Delta T_{Nyquist}$) with relative frequency offset of $\Delta f_{intra} = 1/2\Delta T_{Nyquist}$ between the two superimposed (conventional) OFDM signals. For this OFDM special case, in order to have less complex receivers, for certain setups it still might be beneficial to keep the cyclic prefix. Note, that for the example of Fig. 2b, compared to standard OFDM, we still have half the subcarrier-spacing (with overlapping subcarriers), leading to nearly double amount of data symbols.

According to embodiments, the signal generator may hence be adapted to generate the non-orthogonal multicarrier signal 11 by superimposing a plurality of k OFDM signals, each having a spacing $\Delta f$ of orthogonal subcarriers according to $\Delta f = 1/\Delta T_{Nyquist}$, such that a frequency spacing $\Delta f_{intra}$ of adjacent non-orthogonal subcarriers of the composite multicarrier signal is $\Delta f_{intra} = 1/(k^*\Delta T_{Nyquist})$, wherein $\Delta T_{Nyquist}$ corresponds to the Nyquist sample duration of an OFDM signal transmitted over a bandwidth-limited communications channel, and k is an integer equal to or larger than 2.

More generally, also other signal generations schemes, as e.g. filterbank based multicarrier generation, may be employed. The signal generator may be generally adapted to assign the plurality of overlapping radio resources such that a time spacing $\Delta T_{intra}$ of adjacent signal pulses within a non-overlapping radio resource block corresponds to the Nyquist sample duration $\Delta T_{Nyquist}$, and such a frequency spacing of adjacent signal pulses within a radio resource block is $\Delta f_{intra} = 1/(k^*\Delta T_{Nyquist})$, and wherein a time spacing $\Delta T_{inter}$ of adjacent non-overlapping radio resource blocks corresponds to an integer multiple of $\Delta T_{Nyquist}$, and wherein a frequency spacing $\Delta f_{inter}$ of adjacent non-overlapping radio resource blocks corresponds to an integer multiple of $\Delta f_{intra}$.

An optional usage could also be to switch off one of $k = 2$ generating OFDM building blocks, resulting in standard OFDM. This can e.g. be done depending on the channel quality / SNR. For, example in high SNR operation regimes, the second OFDM building block may be turned on, while in low SNR operation regimes, the second OFDM building block may be turned off. That is to say, the signal generator 12 may be adapted to switch at least one of the plurality of

k OFDM signals on and/or off dependent on a quality of the communications channel.

While in principle a joint equalization and detection of the non-orthogonal multicarrier signal 11 according to the maximum likelihood criterion is possible, a less complex receiver strategy will be described in the following.

It is assumed that a multi-tap equalizer at the receiver side copes with the inter-symbol interference. Further, it is assumed that the non-orthogonal multicarrier signal is generated based on superposition of conventional OFDM. If other signal generation schemes are used for multicarrier signal generation, such as e.g. filterbank based multicarrier generation, the actual channel and crosstalk matrix depends on the time-frequency response.

Hence, for non-orthogonal multicarrier signal generation based on superposition of conventional OFDM, and based on the notation of Fig. 3a, an ideal and perfectly synchronized received signal for a 3x3 BO-MC block may be written as

$$
\begin{bmatrix} y_1 \\ y_2 \\ y_3 \\ y_4 \\ y_5 \\ y_6 \\ y_7 \\ y_8 \\ y_9 \end{bmatrix} = \begin{bmatrix} h_{11} & h_{21} & 0 & h_{41} & 0 & 0 & 0 & 0 & 0 \\ h_{12} & h_{22} & h_{32} & 0 & h_{52} & 0 & 0 & 0 & 0 \\ 0 & h_{23} & h_{33} & 0 & 0 & h_{63} & 0 & 0 & 0 \\ h_{14} & 0 & 0 & h_{44} & h_{54} & 0 & h_{74} & 0 & 0 \\ 0 & h_{25} & 0 & h_{45} & h_{55} & h_{65} & 0 & h_{85} & 0 \\ 0 & 0 & h_{36} & 0 & h_{56} & h_{66} & 0 & 0 & h_{96} \\ 0 & 0 & 0 & h_{47} & 0 & 0 & h_{77} & h_{87} & 0 \\ 0 & 0 & 0 & 0 & h_{58} & 0 & h_{78} & h_{88} & h_{98} \\ 0 & 0 & 0 & 0 & 0 & h_{69} & 0 & h_{89} & h_{99} \end{bmatrix} \begin{bmatrix} x_1 \\ x_2 \\ x_3 \\ x_4 \\ x_5 \\ x_6 \\ x_7 \\ x_8 \\ x_9 \end{bmatrix} + \vec{I} + \vec{n} \qquad (3)
$$

Transmit symbol vector $\mathbf{x} = [x_1\ x_2 \ldots x_9]^T$ passes through the (equalized) communication channel and the crosstalk matrix $\mathbf{H}$, which is a function of the overlapping basic signal pulses $g_{mn}(t)$ and gets disturbed by interference vector $\mathbf{I}$ and noise vector $\mathbf{n}$. At the receiver, this results in receive vector $\mathbf{y} = [y_1\ y_2 \ldots y_9]^T$.

A received signal $\mathbf{y} = [y_1\ y_2 \ldots y_9]^T$ in case of a 1x9 BO-MC block can be represented, based on Fig. 3b, by:

$$
\begin{bmatrix} y_1 \\ y_2 \\ y_3 \\ y_4 \\ y_5 \\ y_6 \\ y_7 \\ y_8 \\ y_9 \end{bmatrix} = \begin{bmatrix} h_{11} & h_{21} & 0 & h_{41} & 0 & h_{61} & 0 & h_{81} & 0 \\ h_{12} & h_{22} & h_{32} & 0 & h_{52} & 0 & h_{72} & 0 & h_{92} \\ 0 & h_{23} & h_{33} & h_{43} & 0 & h_{63} & 0 & h_{83} & 0 \\ h_{14} & 0 & h_{34} & h_{44} & h_{54} & 0 & h_{74} & 0 & h_{94} \\ 0 & h_{25} & 0 & h_{45} & h_{55} & h_{65} & 0 & h_{85} & 0 \\ h_{16} & 0 & h_{36} & 0 & h_{56} & h_{66} & h_{76} & 0 & h_{96} \\ 0 & h_{27} & 0 & h_{47} & 0 & h_{67} & h_{77} & h_{87} & 0 \\ h_{18} & 0 & h_{38} & 0 & h_{58} & 0 & h_{78} & h_{88} & h_{98} \\ 0 & h_{29} & 0 & h_{49} & 0 & h_{69} & 0 & h_{89} & h_{99} \end{bmatrix} \begin{bmatrix} x_1 \\ x_2 \\ x_3 \\ x_4 \\ x_5 \\ x_6 \\ x_7 \\ x_8 \\ x_9 \end{bmatrix} + \vec{I} + \vec{n} \qquad (4)
$$

Here, the non-vanishing secondary diagonal coefficients $h_{41}$, $h_{14}$, $h_{61}$, $h_{16}$, $h_{81}$, $h_{18}$, $h_{52}$, $h_{52}$, $h_{72}$, $h_{27}$, $h_{92}$, $h_{29}$, $h_{63}$, $h_{36}$, $h_{83}$, $h_{38}$, $h_{74}$, $h_{47}$, $h_{94}$, $h_{49}$, $h_{85}$, $h_{58}$, $h_{96}$, $h_{69}$ result from sidelobes of the superimposed conventional OFDM signals resulting in the non-orthogonal multicarrier signal 11.

In both cases this band-diagonal matrix structure can be exploited by advanced receiver structures.

In Eq. (3) and (4) it is assumed to have some means for compensating frequency delays/shifts and time delay offsets within the receiver before separating the symbols ($x_1$ to $x_9$). Residual interference terms due to non-perfect compensation may be included in interference vector **I.** Alternatively, if no dedicated compensation (frequency and timing) schemes are present, the zeros within the matrices **H** naturally vanish, i.e., then each of the symbols $x_1$ to $x_9$ contribute to the interference matrices. **H**owever, this interference still may be compensated afterwards.

As has been shown, the loss of orthogonality of embodiments of non-orthogonal multi-carrier signals may be compensated at the receive side. The denser packing of radio resources may allow a higher spectral efficiency than in conventional OFDM schemes. As a result the receiver complexity will increase compared to conventional OFDM. However, due to Moore's law and the design degree of freedom of the block size $M*N$, this is manageable. For example, the following receiver types may be used to detect embodiments of non-orthogonal multicarrier signals:

■ Maximum likelihood (ML)

    ■ Complete matrix (most complicated variant)
    ■ One per line

■ Sphere decoding
■ Successive interference cancellation (SIC)

    ■ Complete matrix
    ■ One per line
    ■ Example for 3x3 blocks: $x_2$, $x_4$, $x_6$, $x_8$ (see Fig. 3a) boosted as starting points for the SIC

■ Linear receivers

    ■ Zero forcing (ZF)
    ■ Minimum mean squared error (MMSE)

One advantage of proposed embodiments is that the radio resource block structures of the non-orthogonal multicarrier signal may be matched to the processing capacities of an employed receiver. The proposed design allows using very advanced and complex receivers without excluding simple approaches.

The search space usually is "exploding" for those receivers (e.g. ML-type ones) with overlapping signal structures in the non-orthogonal multicarrier signal. With proposed embodiments, signal and receiver complexity may be adjusted in order to find the best compromise between performance and computational feasibility.

By varying the intra-block parameters $\Delta T_{intra}$, $\Delta f_{intra}$ and $g_{mn}(t)$ over frequency and time within a radio resource block, the BO-MC concept may adapt to various channel conditions and usage types. For example, for low-mobility CoMP users it might be attractive to use small $\Delta f_{intra}$ (i.e. subcarrier overlap) in conjunction with large $\Delta T_{intra}$ (no signal pulse overlap in time direction). Hence, the signal generator 12 may be adapted to vary $\Delta T_{intra}$, $\Delta f_{intra}$, and/or $g_{mn}(t)$ over frequency and/or time in response to different channel and/or usage or user conditions. For example, with the simplified conventional OFDM building blocks a small cyclic prefix overhead may be obtained. In this case we can still keep the cyclic prefix (CP) when we want to reduce the receiver complexity. Keeping the CP results in extra overhead. This overhead relatively reduces for longer symbol durations, implying shorter subcarrier spacings. So when we want to support radio channels with higher delay spreads, as expected for CoMP, we can design the BO-MC signal with longer symbol duration, reducing CP overhead (The shorter subcarrier spacing is tolerable as CoMP targets low mobility user, which thus have small Doppler spreads.).

One simple realization of this flexibility may be to switch the intra-block parameters $\Delta T_{intra}$, $\Delta f_{intra}$ and $g_{mn}(t)$ over time.

A more flexible but also more complex way is to use equally sized BO-MC radio resource blocks in terms of overall frequency and time spacing $\Delta T_{inter}$, $\Delta f_{inter}$ with different intra-block parameters, e.g., two or more different sets of intra-block parameters: $\Delta T_{intra}^{(1)}$, $\Delta f_{intra}^{(1)}$, $g_{mn}(t)^{(1)}$ and $\Delta T_{intra}^{(2)}$, $\Delta f_{intra}^{(2)}$, $g_{mn}(t)^{(2)}$.

In most cases it will be preferable to have rather constant communication channels over the whole BO-MC block. The inter-block parameters $\Delta T_{inter}$, $\Delta f_{inter}$ may be matched to coherence time and bandwidth of those communication channels.

Embodiments may support a per-user adaptation to its conditions, allowing a time-frequency radio resource block-wise multiple access scheme where each user can operate with an optimized non-orthogonal multicarrier signal structure.

As schematically illustrated in Fig. 4, other embodiments may also provide a method 40 for transmitting a non-orthogonal multicarrier 11, 21, 22.

The method 40 comprises a step 41 of generating the multicarrier signal 11, 21, 22 by assigning or generating a plurality of overlapping radio resources (time-frequency signal pulses, i.e. signal pulse having both time and frequency components) 13 to one or more users, wherein the plurality of radio resources 13 overlap in time and/or frequency, such that the plurality of overlapping radio resources 13 assigned to the one or more users suffer from self-interference or crosstalk.

Embodiments of the aforementioned apparatuses may comprise a signal processor, respectively, executing a computer program having a program code for performing or supporting embodiments of the above described method when the computer program is executed on said processor. Hence, embodiments may provide a computer program having a program code for performing one of the above described methods when the computer program is executed on a computer or processor. A person of skill in the art would readily recognize that steps of various above-described methods can be performed by programmed computers. Herein, some embodiments are also intended to cover program storage devices, e.g., digital data storage media, which are machine or computer readable and encode machine-executable or computer-executable programs of instructions, wherein said instructions perform some or all of the steps of said above-described methods. The program storage devices may be, e.g., digital memories, magnetic storage media such as a magnetic disks and magnetic tapes, hard drives, or optically readable digital data storage media. The embodiments are also intended to cover computers programmed to perform said steps of the above-described methods.

The description and drawings merely illustrate the principles of the invention. It will thus be appreciated that those skilled in the art will be able to devise various arrangements that, although not explicitly described or shown herein, embody the principles of the invention and are included within its spirit and scope. Furthermore, all examples recited herein are principally intended expressly to be only for pedagogical purposes to aid the reader in understanding the principles of the invention and the concepts contributed by the inventor(s) to furthering the art, and are to be construed as being without limitation to such specifically recited examples and conditions. Moreover, all statements herein reciting principles, aspects, and embodiments of the invention, as well as specific examples thereof, are intended to encompass equivalents thereof.

Functional blocks denoted as "means for ..." (performing a certain function) shall be understood as functional blocks comprising circuitry that is adapted for performing a certain function, respectively. Hence, a "means for s.th." may as well be understood as a "means being adapted or suited for s.th.". A means being adapted for performing a certain function does, hence, not imply that such means necessarily is performing said function (at a given time instant).

Functions of various elements shown in the figures, including any functional blocks may be provided through the use of dedicated hardware, as e.g. a processor, as well as hardware capable of executing software in association with appropriate software. When provided by a processor, the functions may be provided by a single dedicated processor, by a single shared processor, or by a plurality of individual processors, some of which may be shared. Moreover, explicit use of the term "processor" or "controller" should not be construed to refer exclusively to hardware capable of executing software, and may implicitly include, without limitation, digital signal processor (DSP) hardware, network processor, application specific integrated circuit (ASIC), field programmable gate array (FPGA), read only memory (ROM) for storing software, random access memory (RAM), and nonvolatile storage. Other hardware, conventional and/or custom, may also be included.

It should be appreciated by those skilled in the art that any block diagrams herein represent conceptual views of illustrative circuitry embodying the principles of the invention. Similarly, it will be appreciated that any flow charts, flow diagrams, state transition diagrams, pseudo code, and the like represent various processes which may be substantially represented in computer readable medium and so executed by a computer or processor, whether or not such computer or processor is explicitly shown.

**Claims**

1. A transmitter apparatus (10) for transmitting a multicarrier signal (11) associated to at least one user of a communication system, the transmitter apparatus comprising:

   a signal generator (12) for generating the multicarrier signal (11), wherein the signal generator is adapted to assign a plurality of overlapping radio resources (13) to the at least one user, wherein the plurality of radio resources (13) overlap in time and/or frequency, such that the plurality of overlapping radio resources assigned to the at least one user suffer from self-interference.

2. The transmitter apparatus (10) according to claim 1, wherein the signal generator (12) is adapted to assign the plurality of overlapping radio resources (13) such that a time spacing between adjacent overlapping radio resources (13) is $\Delta T_{intra}$, and such a frequency spacing between adjacent overlapping radio resources (13) is $\Delta f_{intra}$, wherein $\Delta T_{intra}$ is smaller than the Nyquist sample duration and/or $\Delta T_{intra} * \Delta f_{intra} < 1$.

**3.** The transmitter apparatus (10) according to claim 1, wherein the signal generator (12) is adapted to assign a plurality of non-overlapping radio resource blocks (23; 25) to the at least one user, wherein a radio resource block (23; 25) comprises a plurality of overlapping radio resources (13), wherein adjacent non-overlapping radio resource blocks (23; 25) do not overlap in time or frequency, and wherein adjacent overlapping radio resources (13) of a resource block overlap in time and/or frequency.

**4.** The transmitter apparatus (10) according to claim 3, wherein the signal generator (12) is adapted to assign the plurality of overlapping radio resources (13) of a radio resource block (23; 25) such that a time spacing between adjacent overlapping radio resources (13) of the radio resource block (23; 25) is $\Delta T_{intra}$, and such a frequency spacing between adjacent overlapping radio resources (13) of the radio resource block (23; 25) is $\Delta f_{intra}$, wherein $\Delta T_{intra}$ is smaller than the Nyquist sample duration and/or $\Delta T_{intra}*\Delta f_{intra}<1$.

**5.** The transmitter apparatus (10) according to claim 3, wherein the signal generator (12) is adapted to use a time spacing $\Delta T_{inter}$ and a frequency spacing $\Delta f_{inter}$ between adjacent non-overlapping radio resource blocks (23; 25) as inter-block parameters, wherein the signal generator (12) is configured to adapt the inter-block parameters to a coherence time and/or a coherence bandwidth of a communications channel of the multicarrier signal.

**6.** The transmitter apparatus (10) according to claim 1, wherein the signal generator (12) is adapted to pulse-shape signal pulses corresponding to the plurality of overlapping radio resources (13) individually.

**7.** The transmitter apparatus (10) according to claim 3, wherein the signal generator (12) is adapted to map a plurality of $M*N$ data symbols $a_{mn,i}$ onto the overlapping radio resources (13) of a radio resource block i, such that a time-domain signal corresponding to the radio resource block i of the multicarrier signal (11) may be expressed as

$$s_i^{[b]}(t) = \sum_{m=0}^{M-1}\left( \exp(j2\pi m\Delta f_{intra}t)\sum_{n=0}^{N-1} a_{mn,i}\, g_{mn}\left(t - n\Delta T_{intra}\right)\right),$$

wherein $M$ denotes a number of overlapping pulses of the the radio resource block *i* in frequency direction, $N$ denotes a number of overlapping pulses of the radio resource block *i* in time direction, $\Delta T_{intra}$ denotes a time spacing of adjacent signal pulses within the radio resource block *i*, $\Delta f_{intra}$ denotes a frequency spacing of adjacent signal pulses within the radio resource block *i*, and wherein $g_{mn}(t)$ denotes the *n*-th signal pulse in time direction and the *m*-th signal pulse in frequency direction.

**8.** The transmitter apparatus (10) according to claim 7, wherein the signal generator (12) is adapted to vary $\Delta T_{intra}$, $\Delta f_{intra}$, and/or $g_{mn}(t)$ over frequency and/or time in response to different communication channel and/or usage conditions.

**9.** The transmitter apparatus (10) according to claim 7, wherein the signal generator (12) is adapted to generate the multicarrier signal (11) comprising the non-overlapping radio resource blocks (23; 25) such that the multicarrier signal (11) may be expressed as

$$s_{all}(t) = \sum_{\tilde{m}=0}^{\tilde{M}-1}\left( \exp(j2\pi\tilde{m}\Delta f_{inter}t) \sum_{\tilde{n}=-\infty}^{\infty} s_{\tilde{n},\tilde{m}}^{[b]}\left(t - \tilde{n}\Delta T_{inter}\right)\right),$$

wherein $M$ denotes a number of non-overlapping radio resource blocks (23; 25) in frequency direction, $\Delta T_{inter}$ denotes a time spacing between adjacent non-overlapping radio resource blocks (23; 25), $\Delta f_{inter}$ denotes a frequency spacing between adjacent non-overlapping radio resource blocks, and wherein $s_{\tilde{n},\tilde{m}}^{[b]}\left(t - \tilde{n}\, T_{\Delta inter}\right)$ denotes the $\tilde{n}$-th non-overlapping radio resource block (23; 25) in time direction and the $\tilde{m}$-th non-overlapping radio resource block (23; 25) in frequency direction.

**10.** The transmitter apparatus (10) according to claim 9, wherein the signal generator (12) is adapted to vary the intra-block parameters $\Delta T_{intra}$, $\Delta f_{intra}$, and/or $g_{mn}(t)$ over frequency and/or time, while using constant values for the inter-block parameters $\Delta T_{inter}$ and $\Delta f_{inter}$.

**11.** The transmitter apparatus (10) according to claim 3, wherein the signal generator (12) is adapted to assign the plurality of overlapping radio resources (13) such that a time spacing $\Delta T_{intra}$ of adjacent signal pulses (13) within a non-overlapping radio resource block (23; 25) corresponds to the Nyquist sample duration $\Delta T_{Nyquist}$, and such that a frequency spacing $\Delta f_{intra}$ of adjacent signal pulses (13) within a radio resource block (23; 25) is $\Delta f_{intra} = 1/(k*\Delta T_{Nyquist})$, wherein k is an integer equal to or larger than 2, and wherein a time spacing $\Delta T_{inter}$ of adjacent non-overlapping radio resource blocks corresponds to an integer multiple of $\Delta T_{Nyquist}$, and wherein a frequency spacing $\Delta f_{inter}$ of adjacent non-overlapping radio resource blocks corresponds to an integer multiple of $\Delta f_{intra}$.

**12.** The transmitter apparatus (10) according to claim 1, wherein the signal generator (12) is adapted to generate the multicarrier signal (11) by superimposing a plurality of $k$ OFDM signals, each having a subcarrier spacing $\Delta f$ of orthogonal subcarriers according to $\Delta f = 1/\Delta T$, with $\Delta T$ being an OFDM symbol spacing in time direction, such that a frequency spacing $\Delta f_{intra}$ of adjacent non-orthogonal subcarriers of the composite multicarrier signal (11) is $\Delta f_{intra} = 1(k*\Delta T)$, wherein $k$ is an integer equal to or larger than 2.

**13.** The transmitter apparatus (10) according to claim 12, wherein the signal generator (12) is adapted to switch at least one of the plurality of k OFDM signals on and/or off depending on a quality of the communications channel.

**14.** A method (40) for transmitting a multicarrier signal (11) associated to at least one user of a communication system, the method comprising:

generating (41) the multicarrier signal (11) by assigning a plurality of overlapping radio resources (13) to the at least one user, wherein the plurality of radio resources overlap in time and/or frequency, such that the plurality of overlapping radio resources assigned to the at least one user suffer from self-interference.

**15.** A computer program having a program code for performing the method of claim 14, when the computer program is executed on a computer or processor.

**Amended claims in accordance with Rule 137(2) EPC.**

**1.** A transmitter apparatus (10) for transmitting a multicarrier signal (11) associated to at least one user of a communication system, the transmitter apparatus comprising:

a signal generator (12) for generating the multicarrier signal (11), wherein the signal generator is adapted to assign a plurality of overlapping radio resources (13) to the at least one user, wherein the plurality of radio resources (13) overlap in time and/or frequency, such that the plurality of overlapping radio resources assigned to the at least one user suffer from self-interference,
wherein the signal generator (12) is adapted to assign a plurality of non-overlapping radio resource blocks (23; 25) to the at least one user, wherein a radio resource block (23; 25) comprises a plurality of overlapping radio resources (13),
wherein adjacent non-overlapping radio resource blocks (23; 25) do not overlap in time, and wherein adjacent overlapping radio resources (13) of a resource block overlap in time and/or frequency.

**2.** The transmitter apparatus (10) according to claim 1, wherein the signal generator (12) is adapted to assign the plurality of overlapping radio resources (13) such that a time spacing between adjacent overlapping radio resources (13) is $\Delta T_{intra}$, and such a frequency spacing between adjacent overlapping radio resources (13) is $\Delta f_{intra}$, wherein $\Delta T_{intra}$ is smaller than the Nyquist sample duration and/or $\Delta T_{intra}*\Delta f_{intra} < 1$.

**3.** The transmitter apparatus (10) according to claim 1, wherein the signal generator (12) is adapted to assign the plurality of non-overlapping radio resource blocks (23; 25) to the at least one user, such that adjacent non-overlapping radio resource blocks (23; 25) do neither overlap in time nor in frequency.

**4.** The transmitter apparatus (10) according to claim 1, wherein the signal generator (12) is adapted to assign the plurality of overlapping radio resources (13) of a radio resource block (23; 25) such that a time spacing between adjacent overlapping radio resources (13) of the radio resource block (23; 25) is $\Delta T_{intra}$, and such a frequency spacing between adjacent overlapping radio resources (13) of the radio resource block (23; 25) is $\Delta f_{intra}$, wherein $\Delta T_{intra}$ is smaller than the Nyquist sample duration and/or $\Delta T_{intra}*\Delta f_{intra} < 1$.

**5.** The transmitter apparatus (10) according to claim 1, wherein the signal generator (12) is adapted to use a time spacing $\Delta T_{inter}$ and a frequency spacing $\Delta f_{inter}$ between adjacent non-overlapping radio resource blocks (23; 25) as inter-block parameters, wherein the signal generator (12) is configured to adapt the inter-block parameters to a coherence time and/or a coherence bandwidth of a communications channel of the multicarrier signal.

**6.** The transmitter apparatus (10) according to claim 1, wherein the signal generator (12) is adapted to pulse-shape signal pulses corresponding to the plurality of overlapping radio resources (13) individually.

**7.** The transmitter apparatus (10) according to claim 1, wherein the signal generator (12) is adapted to map a plurality of $M*N$ data symbols $a_{mn,i}$ onto the overlapping radio resources (13) of a radio resource block $i$, such that a time-domain signal corresponding to the radio resource block $i$ of the multicarrier signal (11) may be expressed as

$$s_i^{[b]}(t) = \sum_{m=0}^{M-1}\left( \exp(j2\pi m\Delta f_{\text{intra}}t)\sum_{n=0}^{N-1} a_{mn,i}g_{mn}\left(t - n\Delta T_{\text{intra}}\right)\right),$$

wherein $M$ denotes a number of overlapping pulses of the the radio resource block $i$ in frequency direction, $N$ denotes a number of overlapping pulses of the radio resource block $i$ in time direction, $\Delta T_{intra}$ denotes a time spacing of adjacent signal pulses within the radio resource block $i$, $\Delta f_{intra}$ denotes a frequency spacing of adjacent signal pulses within the radio resource block $i$, and wherein $g_{mn}(t)$ denotes the $n$-th signal pulse in time direction and the $m$-th signal pulse in frequency direction.

**8.** The transmitter apparatus (10) according to claim 7, wherein the signal generator (12) is adapted to vary $\Delta T_{intra}$, $\Delta_{intra}$, and/or $g_{mn}(t)$ over frequency and/or time in response to different communication channel and/or usage conditions.

**9.** The transmitter apparatus (10) according to claim 7, wherein the signal generator (12) is adapted to generate the multicarrier signal (11) comprising the non-overlapping radio resource blocks (23; 25) such that the multicarrier signal (11) may be expressed as

$$s_{all}(t) = \sum_{\tilde{m}=0}^{\tilde{M}-1}\left( \exp(j2\pi \tilde{m}\Delta f_{\text{inter}}t) \sum_{\tilde{n}=-\infty}^{\infty} s_{\tilde{n},\tilde{m}}^{[b]}\left(t - \tilde{n}\Delta T_{\text{inter}}\right)\right),$$

wherein $\tilde{M}$ denotes a number of non-overlapping radio resource blocks (23; 25) in frequency direction, $\Delta T_{inter}$ denotes a time spacing between adjacent non-overlapping radio resource blocks (23; 25), $\Delta f_{inter}$ denotes a frequency spacing between adjacent non-overlapping radio resource blocks, and wherein

$s_{\tilde{n},\tilde{m}}^{[b]}\left(t - \tilde{n} T_{\Delta inter}\right)$ ) denotes the $\tilde{n}$ -th non-overlapping radio resource block (23; 25) in time direction and the $\tilde{m}$ -th non-overlapping radio resource block (23; 25) in frequency direction.

**10.** The transmitter apparatus (10) according to claim 9, wherein the signal generator (12) is adapted to vary the intra-block parameters $\Delta T_{intra}$, $\Delta f_{intra}$, and/or $g_{mn}(t)$ over frequency and/or time, while using constant values for the inter-block parameters $\Delta T_{inter}$ and $\Delta f_{inter}$.

**11.** The transmitter apparatus (10) according to claim 1, wherein the signal generator (12) is adapted to assign the plurality of overlapping radio resources (13) such that a time spacing $\Delta T_{intra}$ of adjacent signal pulses (13) within a non-overlapping radio resource block (23; 25) corresponds to the Nyquist sample duration $\Delta T_{Nyquist}$, and such that a frequency spacing $\Delta f_{intra}$ of adjacent signal pulses (13) within a radio resource block (23; 25) is $\Delta f_{intra} = 1/(k^*\Delta T_{Nyquist})$, wherein $k$ is an integer equal to or larger than 2, and wherein a time spacing $\Delta T_{inter}$ of adjacent non-overlapping radio resource blocks corresponds to an integer multiple of $\Delta T_{Nyquist}$, and wherein a frequency spacing $\Delta f_{inter}$ of adjacent non-overlapping radio resource blocks corresponds to an integer multiple of $\Delta f_{intra}$.

**12.** The transmitter apparatus (10) according to claim 1, wherein the signal generator (12) is adapted to generate the multicarrier signal (11) by superimposing a plurality of $k$ OFDM signals, each having a subcarrier spacing $\Delta f$ of orthogonal subcarriers according to $\Delta f = 1/\Delta T$, with $\Delta T$ being an OFDM symbol spacing in time direction, such that a frequency spacing $\Delta f_{intra}$ of adjacent non-orthogonal subcarriers of the composite multicarrier signal (11) is $\Delta f_{intra} = 1/(k^*\Delta T)$, wherein $k$ is an integer equal to or larger than 2.

**13.** The transmitter apparatus (10) according to claim 11, wherein the signal generator (12) is adapted to switch at least one of the plurality of $k$ OFDM signals on and/or off depending on a quality of the communications channel.

**14.** A method (40) for transmitting a multicarrier signal (11) associated to at least one user of a communication system, the method comprising:

generating (41) the multicarrier signal (11) by assigning a plurality of overlapping radio resources (13) to the at least one user, wherein the plurality of radio resources overlap in time and/or frequency, such that the plurality of overlapping radio resources assigned to the at least one user suffer from self-interference,
wherein generating (41) the multicarrier signal (11) comprises assigning a plurality of non-overlapping radio resource blocks (23; 25) to the at least one user, wherein a radio resource block (23; 25) comprises a plurality of overlapping radio resources (13), wherein adjacent non-overlapping radio resource blocks (23; 25) do at least not overlap in time, and wherein adjacent overlapping radio resources (13) of a resource block overlap in time and/or frequency.

**15.** A computer program having a program code for performing the method of claim 14, when the computer program is executed on a computer or processor.

Fig. 1

Fig. 2a

Fig. 2b

31

| TX | | |
|----|----|----|
| $x_1$ | $x_2$ | $x_3$ |
| $x_4$ | $x_5$ | $x_6$ |
| $x_7$ | $x_8$ | $x_9$ |

| RX | | |
|----|----|----|
| $y_1$ | $y_2$ | $y_3$ |
| $y_4$ | $y_5$ | $y_6$ |
| $y_7$ | $y_8$ | $y_9$ |

Fig. 3a

32

| TX | | | | | | | | |
|----|----|----|----|----|----|----|----|----|
| $x_1$ | $x_2$ | $x_3$ | $x_4$ | $x_5$ | $x_6$ | $x_7$ | $x_8$ | $x_9$ |

| RX | | | | | | | | |
|----|----|----|----|----|----|----|----|----|
| $y_1$ | $y_2$ | $y_3$ | $y_4$ | $y_5$ | $y_6$ | $y_7$ | $y_8$ | $y_9$ |

Fig. 3b

40

START

41

END

Fig. 4

Europäisches
Patentamt

European
Patent Office

Office européen
des brevets

# EUROPEAN SEARCH REPORT

Application Number

EP 11 30 6219

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | SAFA ISAM ET AL: "Precoded Spectrally Efficient FDM system", PERSONAL INDOOR AND MOBILE RADIO COMMUNICATIONS (PIMRC), 2010 IEEE 21ST INTERNATIONAL SYMPOSIUM ON, IEEE, PISCATAWAY, NJ, USA, 26 September 2010 (2010-09-26), pages 99-104, XP031838149, ISBN: 978-1-4244-8017-3 * page 100 * * figures 2, 3 * | 1,6,14, 15 | INV. H04L27/26 |
| X Y | HANNA BOGUCKA ET AL: "Spectrally agile multicarrier waveforms for opportunistic wireless access", IEEE COMMUNICATIONS MAGAZINE, IEEE SERVICE CENTER, PISCATAWAY, US, vol. 49, no. 6, 1 June 2011 (2011-06-01), pages 108-115, XP011355185, ISSN: 0163-6804, DOI: 10.1109/MCOM.2011.5783994 * page 109 - page 110 * * page 112 * * figure 1 * | 1,2,14, 15 13 | |
| X | PAGADARAI S ET AL: "Non-contiguous multicarrier waveforms in practical opportunistic wireless systems", IET RADAR, SONAR AND NAVIGATION,, vol. 5, no. 6, 1 July 2011 (2011-07-01), pages 674-680, XP006038485, ISSN: 1751-8792, DOI: 10.1049/IET-RSN:20100332 * page 674 - page 676 * | 3-5,7-11 | |

TECHNICAL FIELDS SEARCHED (IPC)

H04L

-/--

The present search report has been drawn up for all claims

| Place of search | Date of completion of the search | Examiner |
|---|---|---|
| Munich | 31 January 2012 | Baltersee, Jens |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

**Europäisches Patentamt**
**European Patent Office**
**Office européen des brevets**

# EUROPEAN SEARCH REPORT

Application Number

EP 11 30 6219

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | WANG JIAN ET AL: "The Prefix Design and Performance Analysis of DFT-based Overlapped Frequency Division Multiplexing (OvFDM-DFT) System", SIGNAL DESIGN AND ITS APPLICATIONS IN COMMUNICATIONS, 2007. IWSDA 2007 . 3RD INTERNATIONAL WORKSHOP ON, IEEE, PI, 1 September 2007 (2007-09-01), pages 361-364, XP031194271, ISBN: 978-1-4244-1073-6 | 12 | |
| Y | * page 362 - page 363 * | 13 | |

TECHNICAL FIELDS SEARCHED (IPC)

The present search report has been drawn up for all claims

| Place of search | Date of completion of the search | Examiner |
|---|---|---|
| Munich | 31 January 2012 | Baltersee, Jens |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

Europäisches
Patentamt

European
Patent Office

Office européen
des brevets

## CLAIMS INCURRING FEES

The present European patent application comprised at the time of filing claims for which payment was due.

☐ Only part of the claims have been paid within the prescribed time limit. The present European search report has been drawn up for those claims for which no payment was due and for those claims for which claims fees have been paid, namely claim(s):

☐ No claims fees have been paid within the prescribed time limit. The present European search report has been drawn up for those claims for which no payment was due.

## LACK OF UNITY OF INVENTION

The Search Division considers that the present European patent application does not comply with the requirements of unity of invention and relates to several inventions or groups of inventions, namely:

see sheet B

☒ All further search fees have been paid within the fixed time limit. The present European search report has been drawn up for all claims.

☐ As all searchable claims could be searched without effort justifying an additional fee, the Search Division did not invite payment of any additional fee.

☐ Only part of the further search fees have been paid within the fixed time limit. The present European search report has been drawn up for those parts of the European patent application which relate to the inventions in respect of which search fees have been paid, namely claims:

☐ None of the further search fees have been paid within the fixed time limit. The present European search report has been drawn up for those parts of the European patent application which relate to the invention first mentioned in the claims, namely claims:

☐ The present supplementary European search report has been drawn up for those parts of the European patent application which relate to the invention first mentioned in the claims (Rule 164 (1) EPC).

Europäisches
Patentamt

European
Patent Office

Office européen
des brevets

Application Number

EP 11 30 6219

**LACK OF UNITY OF INVENTION
SHEET B**

The Search Division considers that the present European patent application does not comply with the requirements of unity of invention and relates to several inventions or groups of inventions, namely:

1. claims: 1, 2, 6, 14, 15

   Further increasing spectral efficiency
   ---

2. claims: 3-5, 7-11

   Assigning non-orthogonal resources
   ---

3. claims: 12, 13

   Alternative generation of spectrally efficient FDM signals
   ---